# EUROPEAN PATENT APPLICATION

(11) **EP 2 607 816 A1**
(43) Date of publication of application: **26.06.2013**
(21) Application number: 11194361.9
(22) Date of filing: 19.12.2011
(51) Int. Cl.: F24J 2/52

(54) **Mounting system for photovoltaic panels**

(71) Applicant: Nemuri Group S.r.l., 39042 Bressanone, Bolzano (IT)
(72) Inventor: Pasotto, Alan, 39042 Bressanone, Bolzano (IT)
(74) Representative: Marchi, Paolo

(57) **Abstract**

A mounting system for photovoltaic panels (P) allowing their full architectonic integration into a building comprises a first type of self-supporting profile (1) provided with seats for the connection to the supporting structure of the building through suitable fasteners, and a second type of self-supporting profile (2) that can be connected perpendicularly to the first type of profile (1) through connecting elements (4) shaped for a snap-fit and/or press-fit coupling with corresponding seats formed on said profiles (1, 2), which are also provided on their top side with seats for top gaskets acting as support for the photovoltaic panels (P) as well as with seats for securing cover elements (3) provided with bottom gaskets and suitable to lock the photovoltaic panels (P).

## Description

The present invention relates to a mounting system that allows the full architectonic integration of photovoltaic panels into a building.

It is known that in addition to the conventional mounting of photovoltaic panels on the roof of a pre-existing building it is also possible to integrate the panels into the architectonic structure of building under construction or renewal by assembling frameless photovoltaic laminates through a mounting system secured to the building. For said assembly to act as a cover for the building and to comply with current requirements, it must possess the following characteristics:
- water tightness;
- thermal insulation features or at least providing the minimum thermal insulation such that the building does not lose its intrinsic properties;
- structural resistance of the cover.

The inventor is aware of two types of solution which possess said characteristics and therefore can be considered as mounting systems for the full integration of photovoltaic panels into buildings.

A first solution includes a system of aluminum profiles running parallel to each other and perpendicular to the ridge of the roof to be built. The photovoltaic laminates are then placed on the profile system and locked therebetween on both sides by means of rubbery "mushroom" gaskets to achieve the water tightness of the system.

A second solution, on the contrary, provides for the photovoltaic laminates to be surrounded by a frame acting as a coupling system for coupling with the system of aluminum profiles, always parallel to each other and perpendicular to the roof ridge. This system also allows to secure insulating panels.

In the first type of system the gaskets for the water tightness are mounted on the outside of the system and therefore exposed to sun and weather that cause their rapid deterioration, in fact the same manufacturing company guarantees the tightness of the gaskets for 5 years only. Considering the required lifetime of a photovoltaic plant and of the covering structure that it forms, it is clear that having to replace the gaskets every 5 years is unpractical and costly and a possible lack of replacement can lead to damages to the plant and to the building.

In the second type of system the frames of the laminates do not guarantee the tightness whereby it is necessary to exploit the slope of the roof pitches to prevent the water from penetrating the building, and this implies that the pitches have at least a 16° slope. This makes the system not suitable for any kind of building, but just for those buildings where the roof has substantially sloped pitches.

Therefore the object of the present invention is to provide a mounting system for the architectonic integration of photovoltaic panels into a building which overcomes the above-mentioned drawbacks.

This object is achieved by means of mounting system having the features recited in claim 1. Other advantageous features are listed in the dependent claims.

A first important advantage of the present mounting system is that of assuring the water tightness even with only 3° slopes and without requiring the gaskets replacement in that they are not exposed to weather, whereby it is possible to integrate the photovoltaic plant into any kind of building and to carry out thereon the routine maintenance only.

A second significant advantage of this system stems from the simplicity of the mounting elements that make it up, which also makes extremely easy to replace a single defective photovoltaic module. Moreover, this mounting simplicity makes the system particularly versatile allowing the integration of any model of frameless photovoltaic laminate, since the system elements are completely adaptable by the installer.

Still another advantage of said mounting system, in a specific embodiment thereof, resides in its capacity to integrate also a roof insulation and the structure for the passage of electric cables and of the optional components for the automatic cleaning of the photovoltaic modules. The cleaning of the system is also particularly simple in that its external surface is substantially linear.

These and other advantages and characteristics of the mounting system according to the present invention will be clear to those skilled in the art from the following detailed description of two embodiments thereof, with reference to the annexed drawings wherein:
Fig.1 is a cross-sectional view of a first type of profile that makes up the system, with its relevant accessory elements;
Fig.2 is a cross-sectional view of a second type of profile that makes up the system, with its relevant accessory elements;
Fig.3 is a perspective view showing an example of a cover formed with the present mounting system;
Fig.4 is a cross-sectional view of said cover taken along line IV-IV of Fig.3;
Fig.5 is a cross-sectional view of said cover taken along line V-V of Fig.3;
Fig.6 is a cross-sectional view of a second embodiment of the first type of profile that makes up the system, with its relevant accessory elements;
Fig.7 is a view similar to Fig.4 of a cover formed according to the second embodiment;
Fig.8 is a partial perspective view of the cover of Fig.7; and
Fig.9 is an exploded perspective view of the cover of Fig.7.

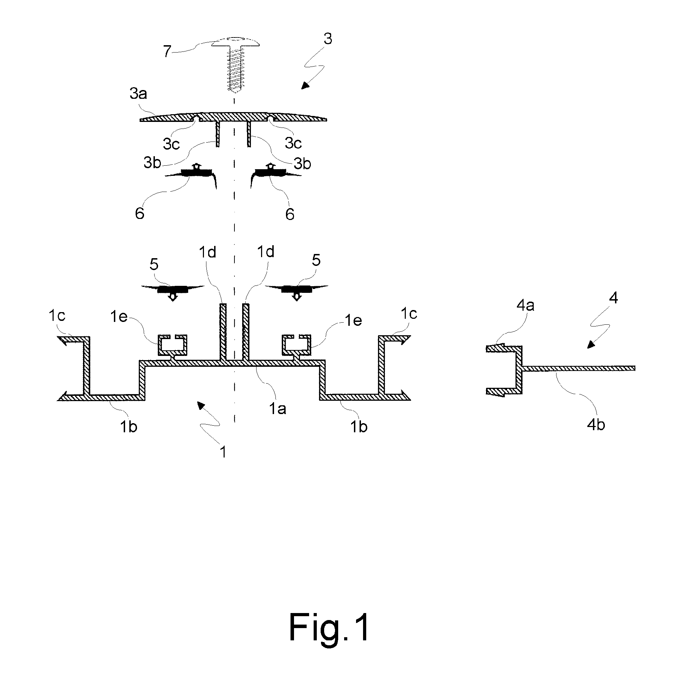

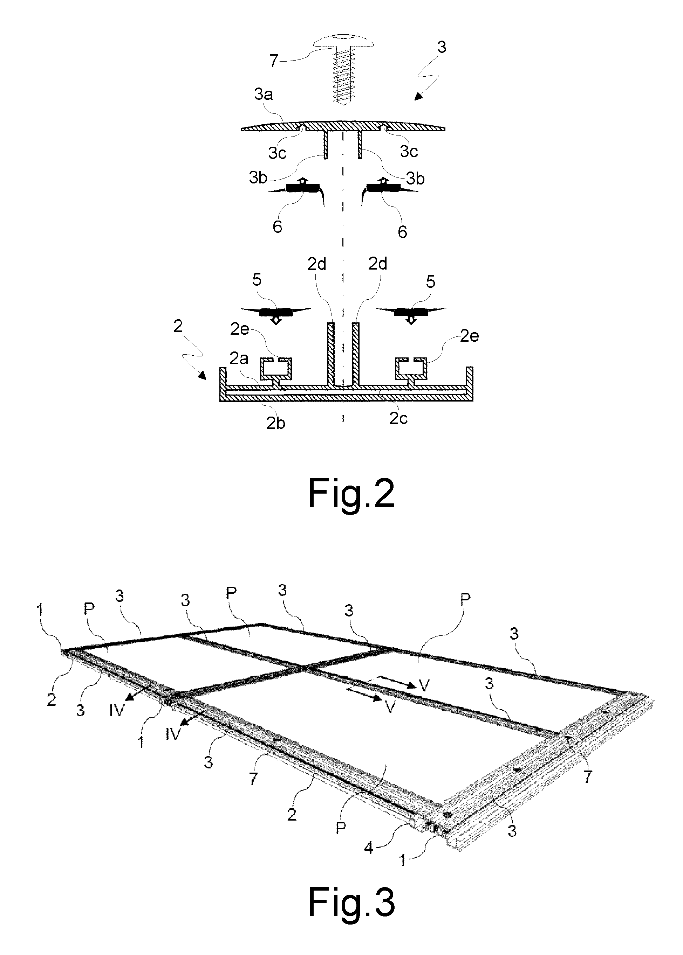

Referring to figures 1 and 2, there is seen that the mounting system according to the present invention is substantially made up of two types of symmetrical profiles 1, 2 with their relevant accessory elements that consist of cover elements 3, connecting elements 4, top gaskets 5, bottom gaskets 6 and screws 7 for securing the cover elements onto profiles 1, 2 as illustrated further on. Profiles 1, 2 and the cover elements 3 are preferably symmetrical to make their mounting easier yet it is clear that in case of particular requirements they could also have a non-symmetrical cross-section.

Generally, profiles 1 are arranged perpendicular to the ridge of the roof to be built while profiles 2 are arranged perpendicular to profiles 1 whereby in the following they will be respectively defined as longitudinal profiles and latitudinal profiles by analogy with the meridians and parallels of the geographic coordinates (considering the roof ridge similar to the equator). Obviously it would also be possible to swap the arrangement of profiles 1, 2 whenever a particular architectonic need in such sense should arise.

A longitudinal profile 1 has a symmetrical cross-section formed by a central plane 1a vertically joined to two lateral planes 1b located lower and ending with C-shaped seats 1c facing outwards. The central plane 1a is also provided, on its top side, with a pair of vertical walls 1d spaced and internally shaped to act as seats for screws 7, as well as with a pair of seats 1e for the top gaskets 5.

A latitudinal profile 2 has a symmetrical cross-section formed by a top plane 2a vertically joined to an underlying bottom plane 2b with which it forms a cavity 2c. As in the longitudinal profile 1, the top plane 2a is also provided with a pair of vertical walls 2d spaced and internally shaped to act as seats for screws 7, as well as with a pair of seats 2e for the top gaskets 5.

An element 4 connecting said profiles 1, 2 is formed by a C-shaped head 4a suitable to snap fit into a seat 1c of the longitudinal profile 1 and by a plate 4b sized to press fit into cavity 2c of the latitudinal profile 2. It should be noted that although the embodiment of Fig.1 illustrates a male/female coupling with the male portion on the connecting element 4 and the female portion on the longitudinal profile 1, as indicated by the arrangement of the locking teeth on the outside of head 4a and on the inside of seat 1c respectively, it is clear that such an arrangement could be reversed.

A cover element 3 is formed by a plate 3a, slightly rounded on its top side to facilitate the water flow on the external surface of the system, provided on its bottom side with a pair of vertical walls 3b and a pair of seats 3c for the bottom gaskets 6. This element is preferably drawn from aluminium or polymer and has holes with a preset spacing which are the seats of the self-tapping screws 7 used to secure it onto profiles 1, 2.

For reasons of manufacturing economy, the cover element 3 is suitable for coupling both with the longitudinal profile 1 and the latitudinal profile 2, i.e. the vertical walls 3b are spaced so as to fit on both the vertical walls 1d and the vertical walls 2d that are substantially identical. Similarly, seats 1e are identical with seats 2e so that they can receive the same gaskets 5 which in turn are preferably identical with gaskets 6, whereby the whole mounting system is made up of six types of elements only: the longitudinal profile 1, the latitudinal profile 2, the cover element 3, the connecting element 4, gaskets 5/6 and screws 7.

With reference to figures 3 to 5 there is now illustrated an example of a cover formed by four photovoltaic panels P and by the mounting system according to the present invention. Profiles 1, 2 are self-supporting profiles obtained by drawing aluminium, which is then anodized, or plastic polymers or polymers derived from vegetal fibers reinforced by a steel skeleton.

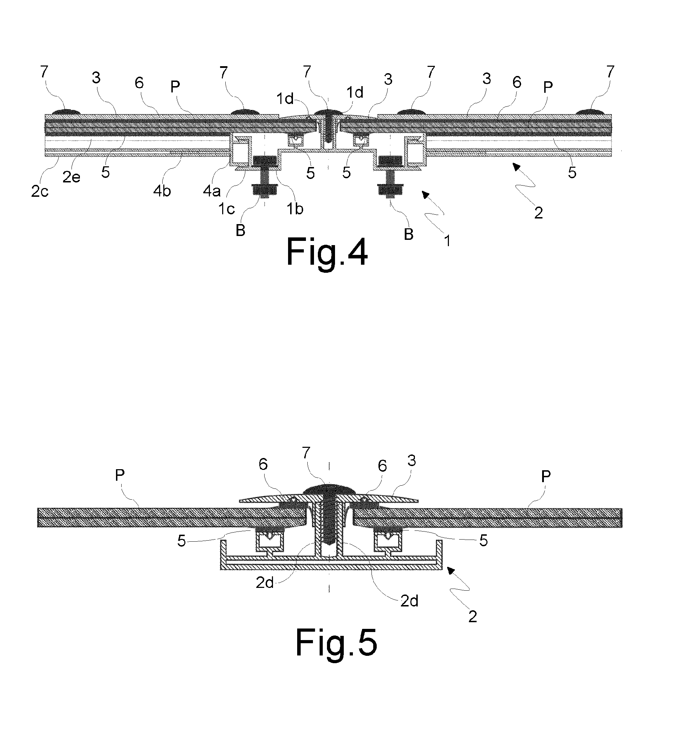

The longitudinal profiles 1 are placed parallel to each other and perpendicularly to the roof ridge and then secured to the supporting structure of the building, at such a distance as to allow the placement of the photovoltaic laminates P provided by the project, by means of fasteners passing through the lateral planes 1b and variable according to the type of supporting structure. The example illustrated in Fig.4 provides bolts B for the mounting on an iron structure (beams, tubes and the like), while wall plugs and self-tapping screws will be used for a cement or brick structure and self-tapping screws alone for a wooden structure, in all instances always with washers of a material suitable to achieve water tightness.

The latitudinal profiles 2 are then perpendicularly connected to the longitudinal profiles 1 through the connecting elements 4 whose portions 4b and 4a are press-fitted and snap-fitted respectively into cavities 2c and seats 1c. It should be noted that since profiles 1, 2 can be cut to measure by the installer, the present mounting system guarantees the maximum flexibility of the distances between the profiles allowing the architectonic integration of any kind of photovoltaic panel P as long as it is rectangular in shape.

Once the supporting grid consisting of profiles 1, 2 and connecting elements 4 has been assembled, the photovoltaic panels P are placed on the top gaskets 5 pre-mounted on profiles 1, 2 in their relevant seats 1e, 2e. Finally, panels P are locked on said grid by means of the cover elements 3, provided with the bottom gaskets 6 pre-mounted in their relevant seats 3e, that are secured by screws 7 passing therethrough to engage the seats formed by walls 1d and 2d (the centering of elements 3 being assured by their vertical walls 3b).

This simple mounting procedure of panels P makes extremely easy to replace a single photovoltaic panel in case of breakage or failure without having to remove other components of the system but for the four cover elements 3 locking it, whereas this operation is quite complicated in prior art mounting systems.

The cover thus formed presents on the outside only the photovoltaic surface of laminates P and the substantially flat cover elements 3, with the heads of the relevant screws 7, whereby the planarity of the cover allows a proper flowing of the water even with only a 3% slope and facilitates the cleaning of the laminates P, especially by means of automatic cleaning systems.

The fact that gaskets 5, 6 (preferably made of EPDM rubber) that guarantee the water tightness of the system are not exposed to weather and UV rays guarantees that their life is equal to the life of the materials from which the cover is made, namely glass and aluminium or glass and polymer.

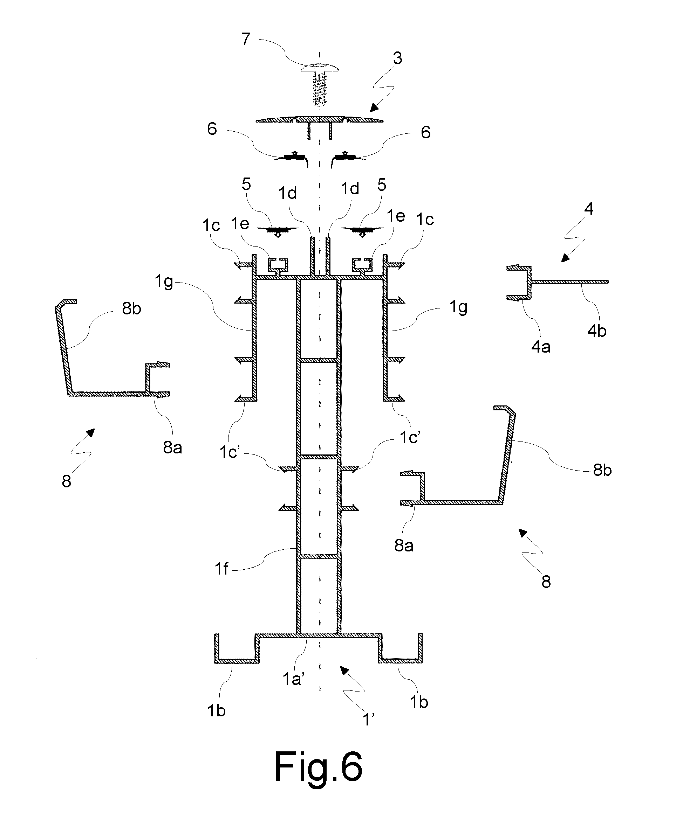

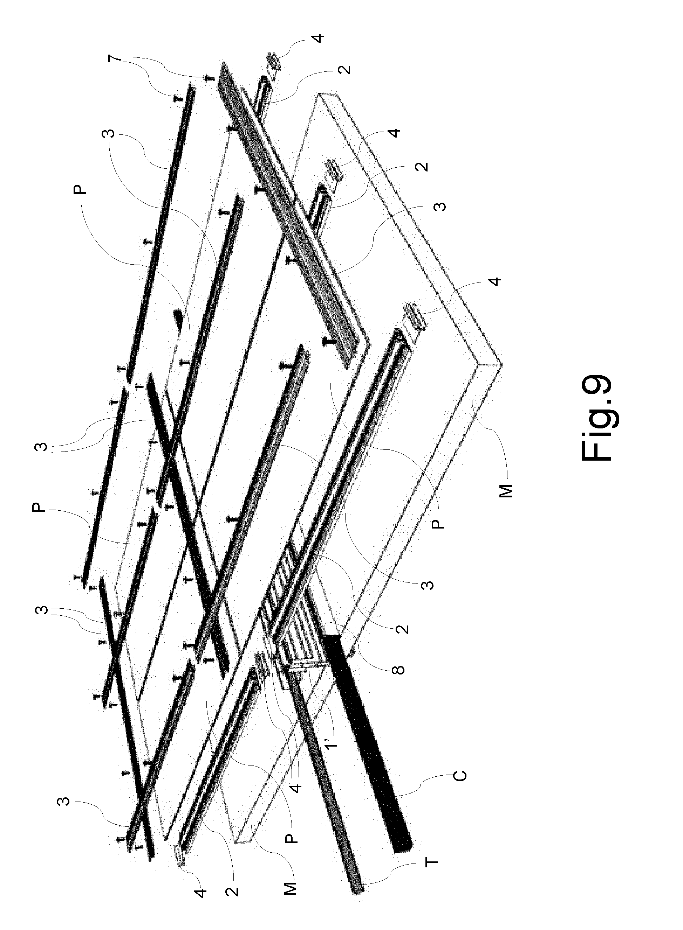

In case the cover is also meant to provide a thermal insulation, the system according to the present invention provides a second embodiment, illustrated with reference to figures 6 to 9, in which the grid supporting the photovoltaic panels also acts as a support for the insulating material. In this second embodiment the latitudinal profiles 2 remain unchanged and therefore are not illustrated in detail, whereas the longitudinal profiles 1' are modified as illustrated in detail in Fig.6.

In practice, a longitudinal profile 1' still has a symmetrical cross-section consisting of a central plane 1a provided, on its top side, with a pair of vertical walls 1d spaced and internally shaped to act as seats for screws 7, as well as with a pair of seats 1e for the top gaskets 5, but the seats 1c for the coupling with the connecting elements 4 are formed directly at the ends of the central plane 1a. Moreover, the latter is connected through a column 1f underneath to a second central plane 1a' which is in turn vertically joined to the two lateral planes 1b located lower.

Other two pairs of C-shaped seats 1c' facing outwards are respectively formed on column 1f and on two bottom extensions 1g of seats 1c. Each of these additional seats 1c' is suitable to receive a support element 8 formed by a C-shaped head 8a suitable to snap fit into seat 1c' and by an L-shaped plate 8b facing said head 8a.

As for the connecting element 4, although the embodiment of Fig.6 illustrates a male/female coupling with the male portion on the support element 8 and the female portion on the longitudinal profile 1', as indicated by the arrangement of the locking teeth on the outside of head 8a and on the inside of seat 1c' respectively, it is clear that such an arrangement could be reversed. Furthermore, for the sake of manufacturing simplicity it is preferable that seats 1c and 1c', and therefore also heads 4a and 8a, are identical.

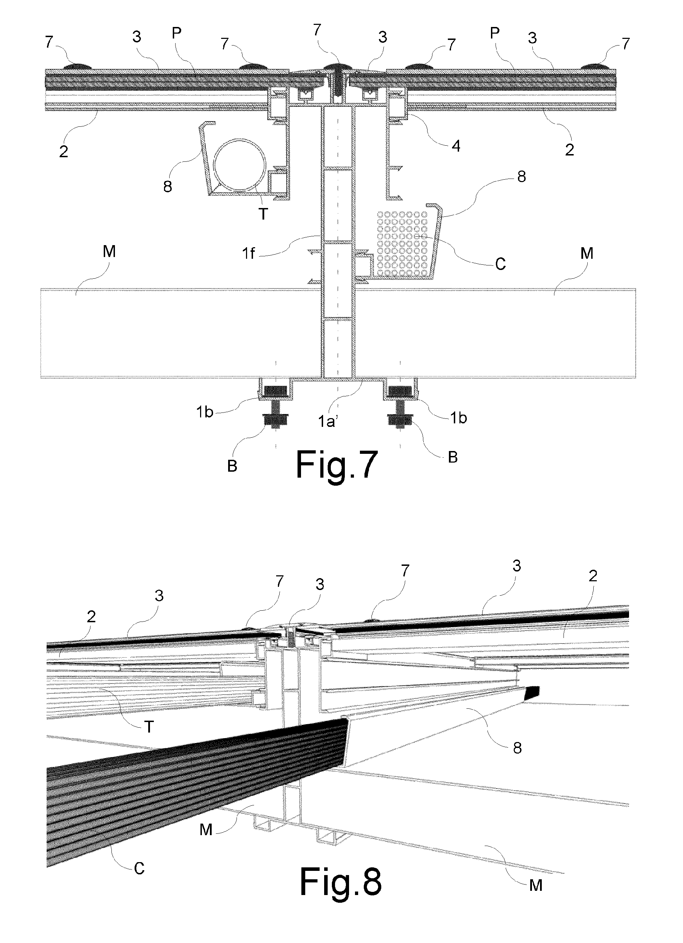

The mounting procedure of this second embodiment is substantially the same as that of the first embodiment, with the longitudinal profiles 1' secured to the supporting structure through fasteners at the lateral planes 1b (e.g. bolts B shown in Fig.7) and the latitudinal profiles 2 connected thereto through the connecting elements 4. However, a longitudinal profile 1' is capable of supporting also panels M of insulating material that rest on the second central plane 1a' as well as a water pipe T of an automatic cleaning system for the photovoltaic plant and/or a bundle of electric cables C, received in respective support elements 8.

It should be noted that column 1f has such an height as not only to allow the placement of the insulating panels M on the base of profile 1' under the support elements 8, but also to assure an adequate air space between panels M and the photovoltaic laminates P, preferably of at least 80 mm, to prevent self-combustion of the insulating material that can be caused by the high temperature (even 70°C) of the surface of the photovoltaic laminates P.

It is clear that the above-described and illustrated embodiments of the mounting system according to the invention are just examples susceptible of various modifications. In particular, the exact shape of profiles 1, 1', 2, of the accessory elements 3, 4 and of gaskets 5, 6 may change according to specific manufacturing needs as well as the number and arrangement of the various seats 1c, 1c', 1e, 2e, 3c as long as the general structure of the system as defined in the appended claims is retained. For example, also the cover elements 3 could be snap-fitted on profiles 1, 1', 2 through obvious modifications of walls 1d, 2d, 3b thus dispensing with screws 7 (which however provide a higher resistance).

Similarly, a person skilled in the art can easily obtain further embodiments of the longitudinal profile such that it performs only the function of support of the insulating panels M, without the further seats 1c' for the support elements 8, or vice versa only the function of support of elements 8 and therefore with a shorter column 1f and seats 1c' possibly formed only on the latter or only on extensions 1g.

## Claims

1. Mounting system for photovoltaic panels (P) comprising a first type of self-supporting profile (1; 1') provided with seats (1b) for the connection to the supporting structure of a building through suitable fasteners (B), **characterized in that** it further includes a second type of self-supporting profile (2) that can be connected perpendicularly to said first type of profile (1; 1') through connecting elements (4) shaped for a snap-fit and/or press-fit coupling with corresponding seats formed on said profiles (1; 1'; 2), which are also provided on their top side with at least a pair of seats (1e, 2e) for top gaskets (5) acting as support for said photovoltaic panels (P) as well as with seats for securing cover elements (3) provided with bottom gaskets (6) and suitable to lock the photovoltaic panels (P).

2. Mounting system according to claim 1, **characterized in that** the seats for securing the cover elements (3) consist of pairs of vertical walls (1d, 2d) spaced and internally shaped to act as seats for screws (7) passing through holes formed in said cover elements (3).

3. Mounting system according to claim 1 or 2, **characterized in that** the seats for coupling a connecting element (4) with the first type of profile (1; 1') consist of C-shaped seats (1c; 1c') facing outwards and provided with internal teeth for the snap fitting of a corresponding C-shaped head (4a) provided with external teeth of said connecting element (4).

4. Mounting system according to any of the preceding claims, **characterized in that** the seats for coupling a connecting element (4) with the second type of profile (2) consist of a cavity (2c) formed between two parallel planes (2a, 2b) of said second type of profile (2) and suitable for the press fitting of a plate (4b) of said connecting element (4).

5. Mounting system according to any of the preceding claims, **characterized in that** the top gaskets (5) are identical with the bottom gaskets (6).

6. Mounting system according to any of the preceding claims, **characterized in that** the top side of the cover elements (3) is slightly rounded.

7. Mounting system according to any of the preceding claims, **characterized in that** the first type of profile (1') includes a first central plane (1a), provided with the seats (1c, 1d, 1e) for the connecting elements (4), the cover elements (3) and the top gaskets (5), which is connected through a column (If) underneath to a second central plane (1a') joined to the seats (1b) for the connection to the supporting structure of a building and suitable to act as support for panels (M) of insulating material, said column (If) being sufficiently high to assure an air space between said panels (M) and the photovoltaic panels (P), preferably of at least 80 mm, such to prevent the surface temperature of the photovoltaic panels (P) from causing damage to the insulating material.

8. Mounting system according to any of the preceding claims, **characterized in that** the first type of profile (1') includes at least one additional seat (1c') for the coupling with a support element (8) suitable to receive a water pipe (T) of an automatic cleaning system for the photovoltaic plant and/or a bundle of electric cables (C).

9. Mounting system according to the preceding claim, **characterized in that** the first type of profile (1') includes a plurality of C-shaped additional seats (1c') facing outwards for the coupling with support elements (8) formed by a C-shaped head (8a) suitable to snap fit into said seats (1c') and by an L-shaped plate (8b) facing said head (8a).

10. Mounting system according to claims 7 and 9, **characterized in that** the C-shaped additional seats (1c') are formed on the column (If) and on two bottom extensions (1g) of the seats (1c) for the connecting elements (4).

11. Mounting system according to any of the preceding claims, **characterized in that** the first type of profile (1; 1') and/or the second type of profile (2) and/or the cover elements (3) have a symmetrical cross-section.

12. Mounting system according to any of the preceding claims, **characterized in that** the first type of profile (1; 1') and/or the second type of profile (2) and/or the cover elements (3) are obtained by drawing aluminium or plastic polymers or polymers derived from vegetal fibers reinforced by a steel skeleton.

13. Mounting system according to any of the preceding claims, **characterized in that** the gaskets (5, 6) are made of EPDM rubber.
